# EUROPEAN PATENT APPLICATION

(11) **EP 1 967 784 A2**
(43) Date of publication of application: **10.09.2008**
(21) Application number: 08004178.3
(22) Date of filing: 06.03.2008
(51) Int. Cl.: F16M 11/18, B66C 13/08

(54) **Improved line and rope system and method for movement of an object through three-dimensional space**

(30) Priority: 06.03.2007 US 893362 P; 07.03.2007 US 683411
(71) Applicant: Rodnunsky, Jim, Granada Hills CA 91344 (US)
(72) Inventor: Rodnunsky, Jim, Granada Hills CA 91344 (US)
(74) Representative: Klunker . Schmitt-Nilson . Hirsch

(57) **Abstract**

Uses line(s) to enable movement of an object through three-dimensional space having clearance limitations or obstructions over an area. Does not require large nearby support structures. The object (50) coupled with the movement line(s) is/are supported by at least three support lines (12,14,16) that are arranged about a perimeter of the area. The support system can enclose any area size or shape. Uses motorized line movement device to displace the lines in a direction determined by the rotation of the line movement devices (80,84,82). The lines are reeved through pulleys attached to the support rope system which direct the lines to the appropriate line movement devices. By appropriate reeving, the object can be controllably moved in three axes that are not required to be orthogonal using one or two lines.

## Description

This application claims benefit of United States Provisional Patent application 60/893,362 filed March 6, 2007 and further is a continuation in part of U.S. Patent Application Serial No. 11/556,264 filed on November 3, 2006; which is a continuation in part of U.S. Patent Application Serial No. 11/251,439, filed on October 15, 2005; which is a continuation of U.S. Patent Application Serial No. 10/709,944, filed on June 8, 2004, now U.S. Patent No. 6,975,089; which is a continuation in part of U.S. Patent Application Serial No. 10/708,158, filed on February 12, 2004, now U.S. Patent No. 7,088,071; which is a continuation in part of U.S. Patent Application Serial No. 10/604,525 filed on July 28, 2003, now U.S. Patent No. 6,809,495, the specifications of which are incorporated herein by this reference.

### BACKGROUND OF THE INVENTION

### FIELD OF THE INVENTION

The invention relates to a system and method for moving an object through three-dimensional space by lines supported on a rope assembly and is more particularly, but not by way of limitation, directed to a system and method by which an object is controllably moved through three-dimensional space with obstructions and limited clearance with a adaptable rope support system.

### DESCRIPTION OF THE RELATED ART

An aerial cable rail system is a system based on an elevated cable or rope along which objects are transported. Existing cable rail systems rely on large fixed structures or complex control systems in order to facilitate the movement of objects. Such systems are impractical or difficult to use in applications that require both a steady platform during movement and do not have, or cannot utilize, large supporting structures that would obstruct the view of customers or fans say, for example, at an indoor sporting event. The conventional systems typically fail to satisfactorily achieve the full spectrum of ease of control, ease of transport, speed and adaptability for demanding applications.

In U.S. Patent No. 4,625,938, an invention is disclosed in which a camera payload can be moved within three-dimensional space. However, this patent also shows four large support structures that are used to support the payload in the invention. Thus, this system does not provide adaptability to venues where such support structures are not available or cannot be used.

In U.S. Patent No. 5,585,707, a system is shown in which a robot or person can be moved within a three-dimensional space. The payload is limited and the support structure is of a small scale. If the structure were to be scaled up, obstacles such as scoreboards, goal posts or light poles would inhibit the motion of the payload through a path between two points defined within the cube shown in this patent, since there are so many wires required to practice the invention. Also, the invention would not appear to allow the Z-axis to vary beneath the cube, and the size of the cube support structure to service a large volume of space would be extremely expensive to build on the scale required for use in stadiums, convention centers or arenas and would obstruct views of patrons at these events.

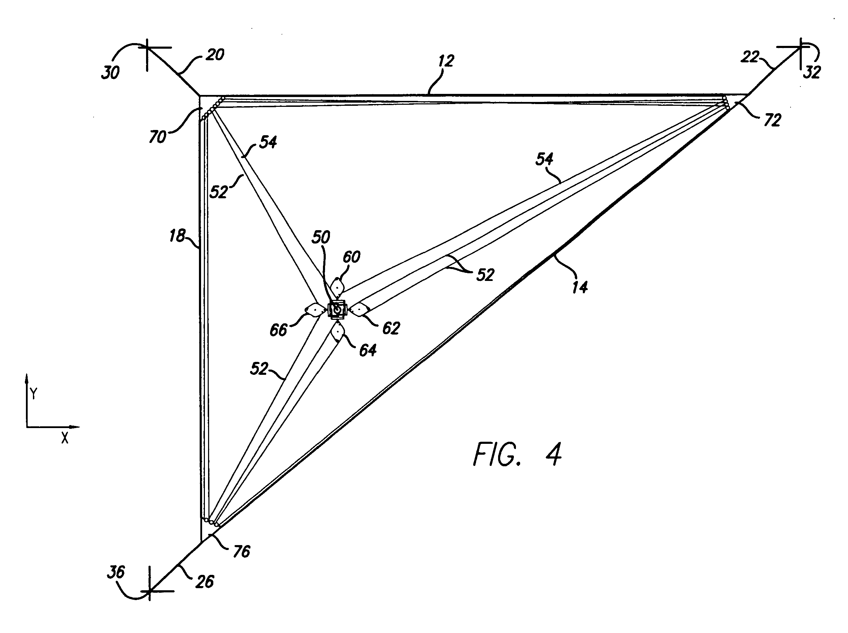

In U.S. Patent No. 5,568,189, another system is disclosed for moving cameras in three dimensional space. The problems with the system disclosed become apparent when the scale of the system is enlarged. Figure 4 of U.S. Patent 5,568,189 shows how two parallel highline cables sag inward when the payload is in the middle of the X, Y space. Since the system does not use strong rails to support the Y-axis rope, the weight bearing of the system is dependent upon the strength of the building or structure in which it is mounted and the springs in its weight bearing X-axis connectors. The motors for the various axes are mounted up in the rigging, which would require multiple extremely long power cables to traverse the volume of space along with the payload if the system were modified for outdoor use. Moreover, the size of the motors limits the payload that can be carried, and further limits the speed at which the payload can be carried.

Thus, a need exists for an improved system and method for controlling movement of an object through a three-dimensional space having obstructions and limited clearance without using close-in, view obstructing structures to support the object and its related equipment.

### BRIEF SUMMARY OF THE INVENTION

One or more embodiments of the invention are directed to a system and method for moving an object through a three-dimensional space using lines and a rope support system. Embodiments of the invention, for example, may be used for sporting events, concerts or any other activity that benefits from movement of a camera or other object to any position within a three-dimensional space. Further objects are directed to a system and method for moving an object through a three-dimensional space with minimal clearances or obstacles located in the space that are to be avoided while also maintaining minimum heights for the object and its control lines. Additional objects of the invention are directed to a system and method for moving an object through a three-dimensional space without using large support structures that can obstruct or block views of customers particularly at sporting events. Movement of the object using embodiments of the invention includes displacement of the object in the horizontal X and Y directions and displacement in the vertical or Z direction.

In one embodiment, an object is moved through a three-dimensional space over an area by lines attached to the object and coupled to line movement devices. Support is provided by at least a first support rope, a second support rope and a third support rope that are arranged about the perimeter of the area to provide a flexible support system for the object. The support system is adapted to enclose any area size or shape and can be adapted so that the object and its control lines do not contact obstructions during movement within the three-dimensional space of interest. The lines are coupled to the object and appropriate motorized line movement devices to displace the lines in a direction determined by the rotation of the line movement devices. The flexible lines are reeved through pulleys attached to the support rope system which direct the lines to the appropriate line movement devices. By appropriate reeving, the object can be moved in three orthogonal directions with two lines and motorized line movement devices so the object is controllably moved within an entire three-dimensional space of interest. In another embodiment, the two movement lines are connected at the Z movement device yielding a system that is configured to move an object in three dimensions via one line.

In one embodiment, the object includes a camera which includes a live video camera, a wireless camera and other electrical, mechanical and optical equipment, including a still camera, audio recording equipment and other types of recording or sensing devices in addition to live feed cameras used to capture live images. In further embodiments, the object includes a power source and may include a battery, a generator or other sources of power as required for particular applications. In one embodiment, the object includes a self-leveling apparatus so that in certain uses, such as for a camera or other equipment, the object remains substantially level during movement of the object so picture image and quality are not adversely impacted by unwanted swaying or unwanted movement of the camera. The self-leveling apparatus may be active, meaning that power is utilized to actively stabilize the camera. Conversely, the self-leveling apparatus may be passive, meaning that non-powered dampening devices configured to provide resistance to movement are utilized to limit or prevent swinging of the camera.

In one embodiment, tension is applied to one or more of the anchor ropes and thus the entire system of support ropes by a tensioning device that is either manually operated or in one or more embodiments, is operated by any known powered means. In an embodiment, the movement of the object and the lines coupled to the object is controlled to substantially avoid contact with obstructions located within the three-dimensional space of interest, such as, for example, a scoreboard at an indoor arena.

In one or more embodiments, the type of line embodiments of the invention that are utilized include synthetic rope fibers such as, but not limited to, HMDPE (High Molecular Density Polyethylene) fibers such as Spectra, or improved fibers such as Vectran and include 1/8 inch Tech 12 synthetic rope. In one or more embodiments, the support ropes are 1/4 inch Tech 12 support rope. Other and further advantages will appear to persons skilled in the art from the figures and description provided herein.

### BRIEF DESCRIPTION OF THE DRAWINGS

The above and other aspects, features and advantages of the invention will be more apparent from the following more particular description thereof, presented in conjunction with the following drawings wherein:

Figure 1 is a perspective schematic view of one embodiment of the invention illustrating the support ropes and flexible lines.

Figure 2 is a top view of one embodiment of the invention showing the support ropes and flexible lines.

Figure 3 is a top view of an embodiment of the invention illustrating an aspect of the invention.

Figure 4 is another top view of one embodiment of the invention with three support ropes.

Figure 5 is a side elevation view illustrating another embodiment of the invention showing the object and an obstruction in the three-dimensional space.

Figure 6 is a perspective view showing an embodiment of a corner of the support ropes.

Figure 7 is a perspective view of the tensioning device for the support ropes in one embodiment of the invention.

Figure 8 is a side elevation view of a self-leveling apparatus and a camera used in one or more embodiments of the invention.

Figure 9 is a side elevation view of another embodiment of a camera and a power source for the camera used in one or more embodiments of the invention.

Figure 10 is a perspective view of an embodiment employing 2 horizontal support lines from which to couple at least three anchor points that in turn couple with the movement line(s).

Figure 11 is a perspective view of an embodiment employing 2 horizontal support lines from which to couple at least three anchor points that in turn couple with the movement line(s).

Figure 12 is a close-up perspective reeving diagram of the top of the scoreboard as shown in Figs. 10 and 11.

### DETAILED DESCRIPTION OF THE PREFERRED EMBODIMENT

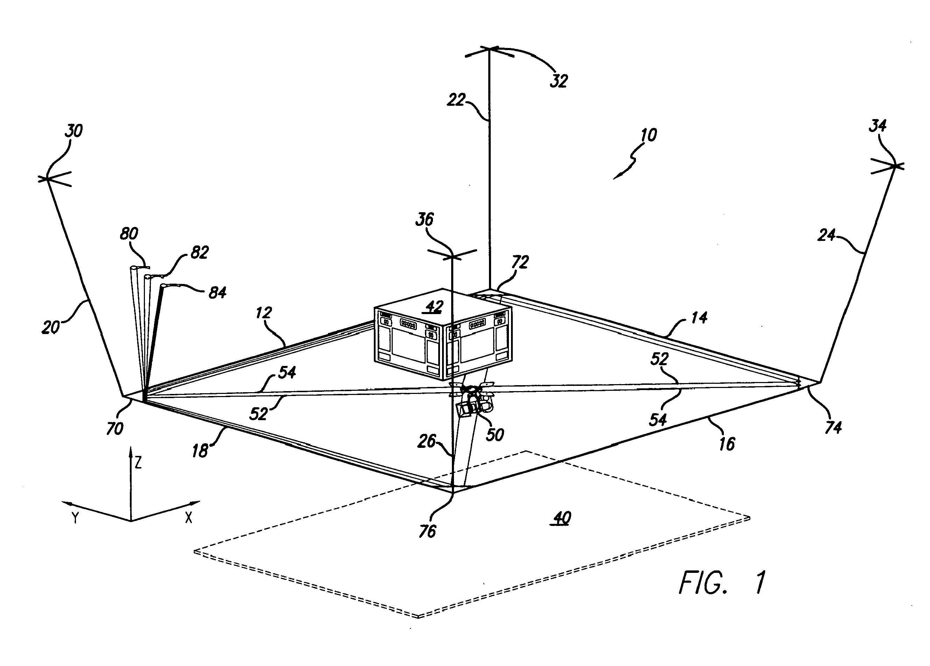

A system for movement of an object throughout a three-dimensional space by lines and a rope support system will now be described. Embodiments of the invention move the object throughout a three-dimensional space by using one or two lines. Embodiments that utilize two lines may be converted to embodiments that utilize one line by coupling the two lines at the Z movement device for example. As all embodiments may utilize one or two lines, for ease of illustration the two line embodiments will be described. The two lines are moved by rotating drum winches that are driven by motors in one or more embodiments. One line controls the X-axis motion of the object and the second line controls the Y-axis motion of the object. The object is moved in the Z-axis direction in one embodiment by rotation of a Z-axis drum winch that controls movement of both the X-axis line and Y-axis line to raise and lower the object. In the following description, numerous specific details are set forth to provide a more thorough description of embodiments of the invention. It will be apparent, however, to one skilled in the art, that the invention may be practiced without these specific details and well known features have not been described in detail so as not to obscure the invention. For example, in a one line embodiment, the first and second lines that control movement in the X and Y axis are coupled at Z movement device 84 as shown in Figure 1 and form one line. Although they are still termed X and Y lines in a one line embodiment, they are simply two sides of one line.

Figure 1 shows a perspective view of one embodiment of system 10. The three axes are shown in Figure 1 with the X-axis, Y-axis and Z-axis. The X-axis and Y-axis designate generally orthogonal horizontal directions and the Z-axis designates the vertical direction. There is no requirement that the axes be orthogonal though so long as the sheaves supporting the two line sides are near each other at each support. Hence, any geometry is thus configured. In this embodiment, support rope 12, support rope 14, support rope 16 and support rope 18 are configured to surround the perimeter of an area of interest such as court 40 as shown in Figure 1. Support ropes 12, 14, 16 and 18 are attached to anchor rope 20, anchor rope 22, anchor rope 24 and anchor rope 26 as shown in Figure 1. Support rope is another name for support line and support lines 12, 14, 16 and 18 may be rigid or flexible for example. Corners 70, 72, 74 and 76 may be weighted to keep support lines 12, 14, 16 and 18 relatively straight.

Anchor ropes 20, 22, 24 and 26 are further attached to a selected series of anchor points 30, 32, 34 and 36 as shown schematically in Figure 1. Anchor points 30, 32, 34 and 36 may be located at distant supporting structures such as support columns, girders, and other man made or natural structural formations that can provide sufficient support and anchorage. Figure 1 shows four anchor points 30, 32, 34 and 36, but it is understood and it is within the scope of the present invention that a different number of anchor points can be utilized and that anchor ropes 20, 22, 24 and 26 may share one or more anchor points. For three-dimensional coverage an embodiment employing at least three anchor points allows for non-linear three-dimensional coverage.

In one embodiment, support rope 12, support rope 14, support rope 16 and support rope 18 are positioned in a substantially planar configuration in the X-axis and Y-axis plane as shown in Figure 1. Alternative configurations, including non-planar arrangements of the support ropes, are within the scope of the invention. In one embodiment, support rope 12, support rope 14, support rope 16 and support rope 18 are positioned in an approximate Z-axis position as illustrated in Figure 1 below the bottom of an obstruction, which as shown in Figure 1 is a scoreboard 42. As long as the two line sides are located near one another at each support point any three dimensional non-planar configuration is thus achieved since the total amount of X line and total amount of Y line from each support point to the object being supported is relatively equal regardless of the position of the object. For one line embodiments, X line side and Y line side of the single support line is hence equal between the support points, here the corners.

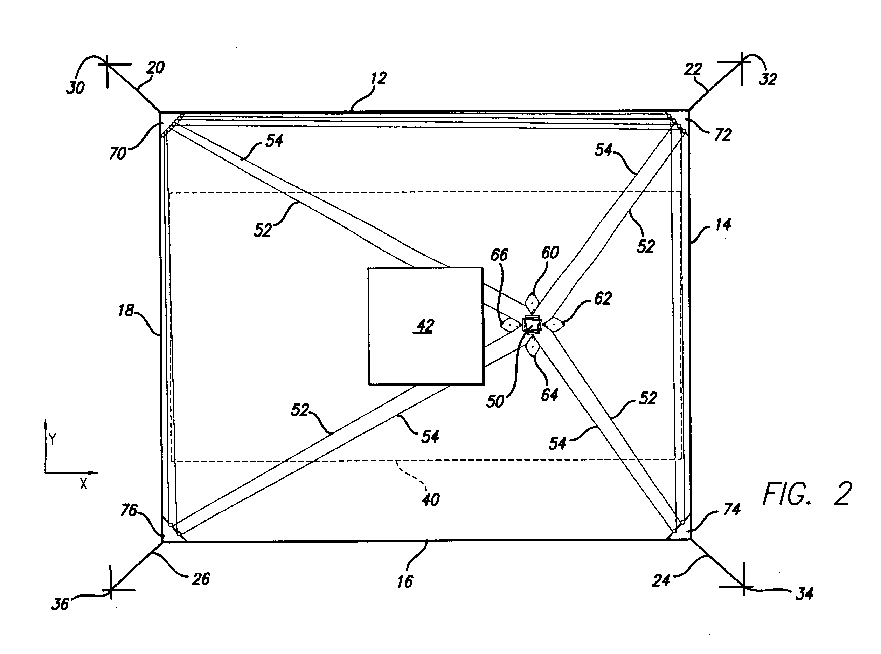

As shown in Figure 2, object 50 is supported by and moved in three dimensions by two lines, X movement line 52 and Y-movement line 54. X movement line 52 and Y-movement line 54 may be coupled at the Z movement device to allow for a one line embodiment. Figure 2 shows the reeving for X-movement line 52 and Y movement line 54. X-movement line 52 moves object 50 through sheave 62 and sheave 66 and Y-movement line 54 moves object 50 through sheave 60 and sheave 64. Each of the lines 52 and 54 forms a pair of "V' shapes on opposing sides of the object 50 when viewed from above as in Figure 2. In one or more embodiments, object 50 provides a mobile attachment point for cameras, video equipment, wireless communication devices, mining scoops, logging hooks or the like, and can be used for many different tasks that require a movable platform.

X-movement line 52 is reeved through a series of pulleys located as indicated in Figure 2 at corner 70, corner 72, corner 74 and corner 76 and coupled to X-axis drum winch 80 configured to intake line on one side and eject line on another, shown in Figure 1 adjacent to corner 70. Y-movement line 54 is reeved through a series of pulleys located as indicated in Figure 2 at corner 70, corner 72, corner 74 and corner 76 and coupled to Y-axis drum winch 82 configured to intake line on one side and eject line on another, also shown in Figure 1. Both X-axis drum winch 80 and Y drum winch 82 may be implemented as "bull wheels" that each move one side of line from one side of object 50 to the other side. As the sheaves coupled to the object being supported that are not having line injected or extracted to them simply rotate, relatively independent motion in the X and Y axes is achieved.

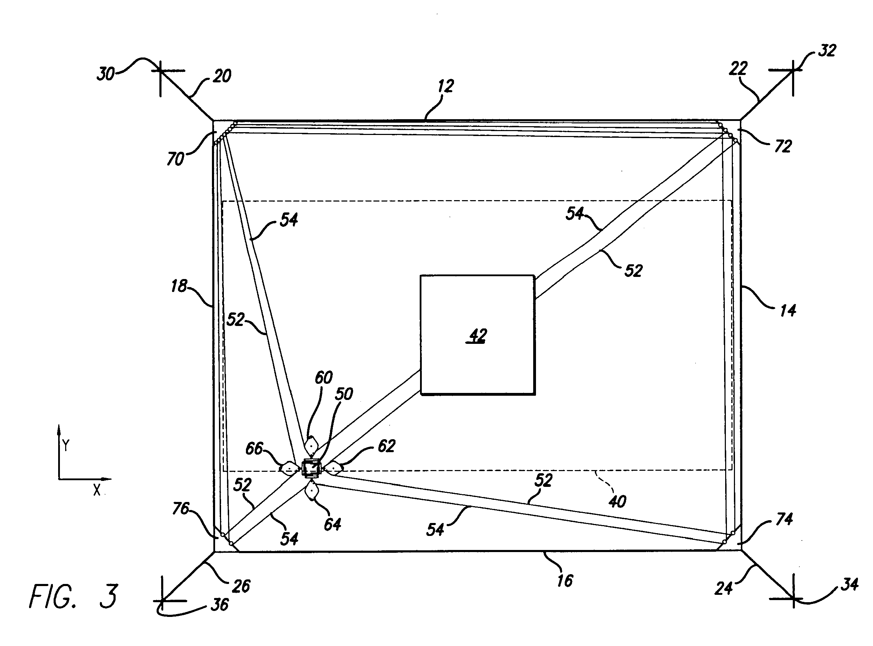

By rotating X-axis drum winch 80, object 50 can be moved in the X direction for example, toward support rope 14 or toward support rope 18 as shown in Figure 2. By rotating Y-axis drum winch 82, the object 50 is moved in the Y direction for example, toward support rope 12 or toward support rope 16 in Figure 2. Figure 3 shows movement of object 50 having been moved by X-axis drum winch 80 and Y-axis drum winch 52 in both the X direction and Y direction from the position of object 50 shown in Figure 2.

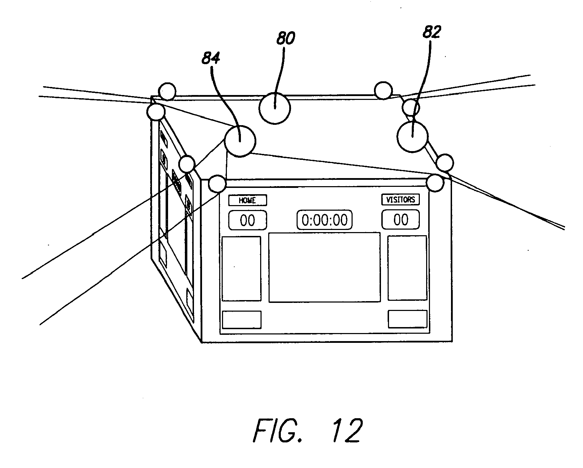

In further embodiments, Z-axis drum winch 84, as shown in Figure 1, is coupled to both X-movement line 52 and Y-movement line 54. In the one line embodiment, Z-axis drum winch 84 also known as the Z movement device provides a coupling point for coupling X-movement line 52 to Y-movement line 54 either on one end (to provide a large two ended line) or by coupling both ends of each line to one another (to provide a large line loop with no ends). By decreasing the length of each of the X-movement line 52 and Y-movement line 54 in the system 10 by movement of Z-axis drum winch 84, object 50 is moved toward scoreboard 42, or upward in the Z-direction as shown in the embodiment in Figure 1. By instead increasing the length of each of X-movement line 52 and Y-movement line 54 into system 10 by appropriate movement of Z-axis drum winch 84, object 50 can be moved toward court 40, or downward in the Z-direction as in Figure 1. See Fig. 12 and associated description further in this paper regarding the X and Y shifting of line from one side of the supported object to the other and the Z intake or output of line for raising or lowering the object.

For purposes of this disclosure, the motor or motors and drive pulleys that move X-axis drum winch 80, Y-axis drum winch 82 and Z-axis drum winch 84 are not shown for ease of illustration. The parent applications incorporated by reference at the beginning of this disclosure provide alternative reevings that may be utilized with embodiments of the invention described herein for example. Motors along with their associated drive pulleys and drum winches that minimize rope wear and provide anti-derailing features can be used to drive the lines. The motors may comprise stepping motors or standard motors with brake systems in order to lock motion when the motors have stopped operating. The control of the motors for drum winches 80, 82 and 84 can be in the form of simple switches or a computer system that takes into account the Z-axis position of object 50 to keep object 50 in a substantially constant Z-axis position while traversing the X-axis and or the Y-axis such as shown in Figures 2 and 3. Figure 3 shows supported object 50 moved to the lower right corner of the drawing by injecting X support line 52 into sheave 62 and out of sheave 66, while Y axis movement is performed by injecting Y support line 54 into sheave 60 and out of sheave 64. Although this description utilizes X and Y support lines they may also be coupled together at the Z movement device to form two line sides of a single line.

In one or more embodiments, X-movement line 52 and Y-axis movement line 54 comprise 1/8 inch Tech 12 synthetic rope and other line sizes, dimensions and materials are within the scope of the invention. In other embodiments, support ropes 12, 14, 16 and 18 comprise 1/4 inch Tech 12 rope and other materials, sizes and dimensions of lines or ropes are within the scope of the invention. The invention is not limited to a system with a rectangular configuration or to a set number of support ropes or anchor ropes. The invention can be adapted to surround areas of various shapes, including triangular embodiments as shown in Figure 4, quadrilateral embodiments and embodiments where the area is of an irregular shape or is comprised of curved shapes. The anchor points for the anchor ropes need not be positioned equidistant from each other but can be located where sufficient anchorage can be found.

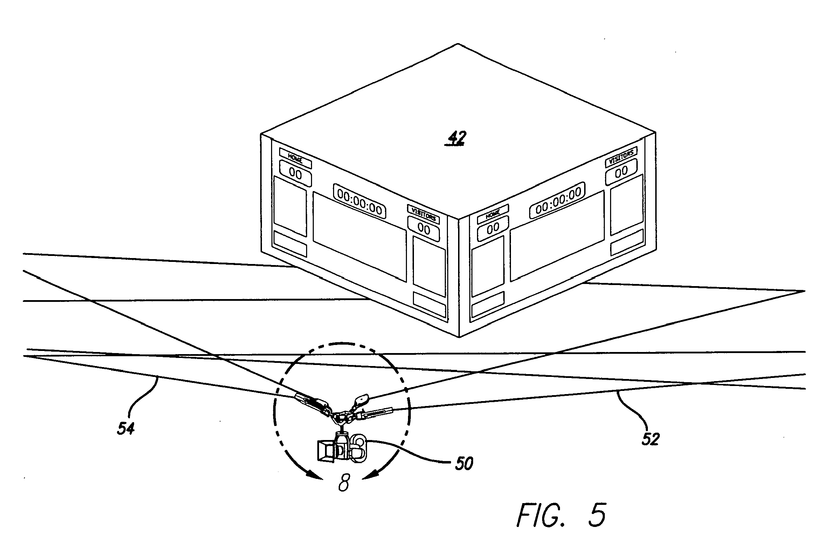

As illustrated in Figure 5, object 50 can be moved over the entire area of interest, here court 40, so that object 50, X-movement line 52 and Y-movement line 54 do not contact an obstruction such as the scoreboard 42 within the three-dimensional space above the area of interest but remain under the scoreboard 42. In one or more embodiments, corner 70, corner 72, corner 74 and corner 76 are located at a Z-axis position that is approximately the same Z-axis position as the bottom of the scoreboard 42.

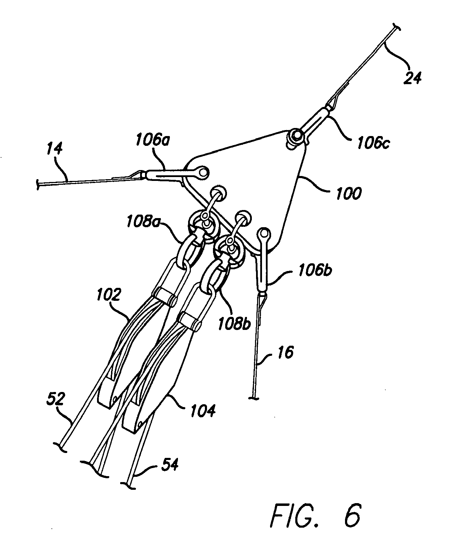

Figure 6 shows one embodiment of a corner such as corner 74. In this embodiment, support rope 14 is coupled to plate 100 by connector 106a and support rope 16 is coupled to plate 100 by connector 106b. Plate 100 is shown in a substantially triangular configuration, but other configurations are within the scope of the invention. Support rope 24 is coupled to plate 100 by connector 106c. The connectors 106 are shown as generally shaped as removable U-bolt connectors in Figure 6 but other types of connectors known in the art are within the scope of the invention. Support rope 24 may be disconnected at connector 106c to allow for storage of the support lines for quick disassembly. Alternatively, support rope 24 may be coupled with a winch to allow for releasing tension while applying tension may be utilized to put the support rope back into place for use, for example when a game occurs in the area beneath the supported object. By allowing for all but one of the support lines to disconnect or release, the remaining support lines and movement lines may be stored near the support line that does not release for example. Rapid storage and deployment is thus achieved.

X-movement line 52 is reeved through sheave 102 attached to plate 100 by shackle 108a as shown in Figure 6. Y-movement line 54 is reeved through sheave 104 that is secured to plate 100 by shackle 108b also as shown in Figure 6. In one or more embodiments, sheave 102 and sheave 104 are high speed pulleys. In various embodiments, additional sheaves are utilized at a corner where X-movement line 52 or Y-movement line 54 is reeved a multiple number of times to a particular corner. Further, additional plates can be utilized at a corner with multiple sheaves.

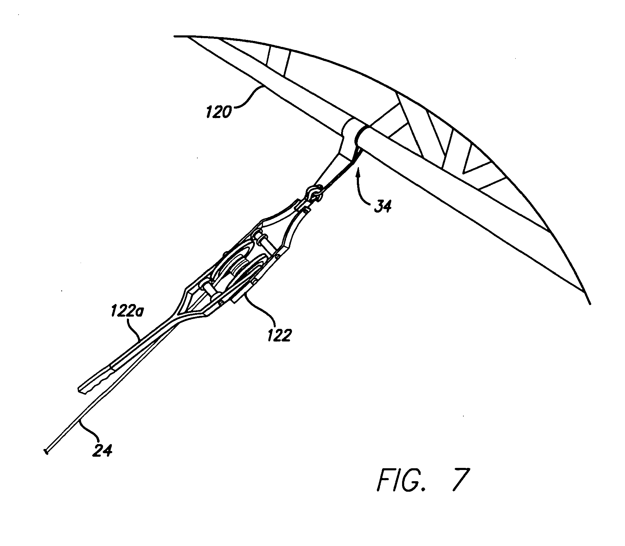

Figure 7 shows an embodiment of an anchorage for the invention. Anchor line 24 is secured to structure 120 which, in this embodiment is a support structure component such as used for a convention hall or arena. In one embodiment, anchor line 24 is coupled to tensioner 122 which is then secured to structure 120. In this embodiment, tensioner 122 is a manually operated tensioning device. By an appropriate number of hand cranks on handle 122a of tensioner 122, tension is imparted to anchor line 24 and also to one or more support ropes 12, 14, 16 and 18 in system 10.

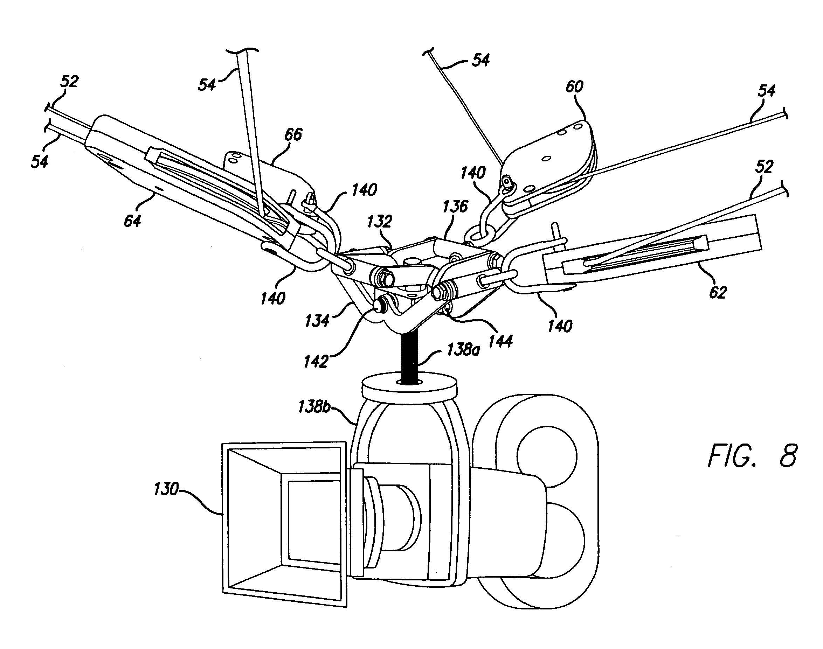

Figure 8 shows one embodiment of the invention that includes camera 130 coupled to self-leveling apparatus 132. In this embodiment, self-leveling apparatus 132 includes connector 134 which is of a "W" configuration and is attached to sheave 62 by first shackle 140 and is attached to sheave 66 by second shackle 140. Self-leveling apparatus 132 also includes second connector 136 which is attached to sheave 60 by third shackle 140 and is attached to sheave 64 by fourth shackle 140. Self-leveling apparatus 132 is coupled to rod 138a which is attached to harness 138b that supports camera 130.

During movement of self-leveling apparatus 132 by X-movement line 52 or Y-movement line 54, apparatus 132 can pivot about connector pin 142, for X-axis movement, and can pivot about connector pin 144, for Y axis movement. Such pivoting motion allows camera 130 to remain substantially level and without unwanted swaying motion that could adversely impact picture quality from the camera. In one or more embodiments, the weight of camera 130 aids in maintaining the self-leveling apparatus 132 in a substantially level arrangement by the downward or Z direction weight of camera 130.

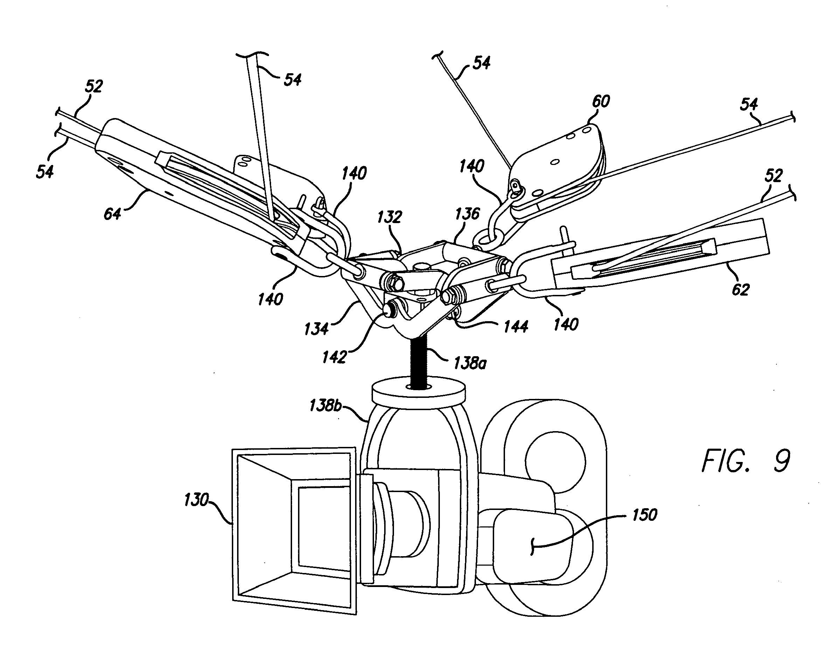

Figure 9 shows an embodiment where camera 130 includes power source 150. In one or more embodiments, power source 150 may include a battery, several batteries and other power sources known in the art for powering electrical devices and include embodiments with a generator or other portable power source. Wireless transceivers may also be utilized or coupled with camera 130. In addition, sheaves 60, 62, 64 and 66 (see Fig. 8 as well) may include generators to inductively charge power source 150 for example a battery when line moves through the sheaves.

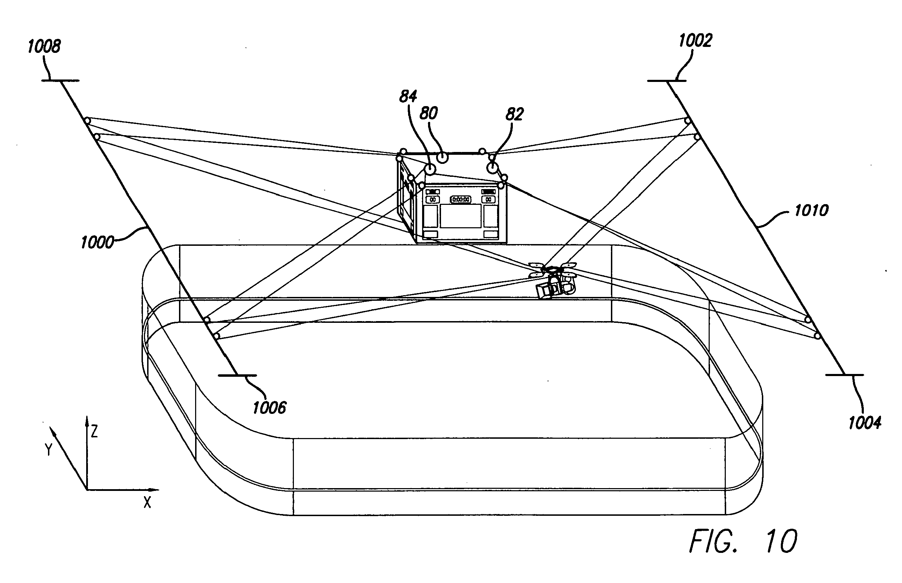

Figure 10 is a perspective view of an embodiment employing two support lines from which to couple at least three anchor points that in turn couple with the movement line(s). The support lines are horizontally configured to support line movement sheaves. Support line 1000 for example support two sets of redirection sheaves for redirecting X movement line and Y movement line each. X-axis drum winch 80, here a bull wheel is utilized to shift X movement line from the left side of the figure to the right side of the figure and visa versa. Y-axis drum winch 82 is utilized to shift Y movement line from the front of the figure to the back and visa versa to allow for motion of the camera shown from the front and back of the figure. Asserting Z movement device 84 here a winch in one direction wherein Z movement device is coupled to both X movement line and Y movement line (or X and Y line sides in one line embodiments) results in vertical displacement up while rotation of Z movement device in the other direction results in the opposite vertical displacement.

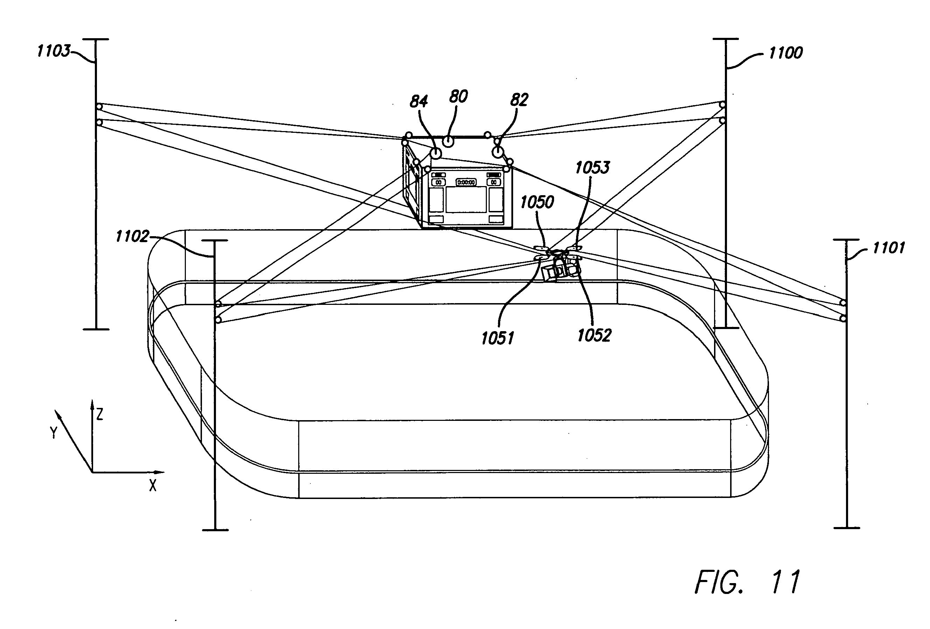

Figure 11 is a perspective view of an embodiment employing 2 horizontal support lines from which to couple at least three anchor points that in turn couple with the movement line(s). In addition, sheaves 1050-1053 operate identically to those of Fig. 10, wherein line moved by a particular line movement device is injected into one side of the camera while being extracted from the other side results in motion towards the extracted line. Hence if X movement line is injected into sheave 1053 and removed from 1051, then the camera moves to the left in the figure, while line simply rolls through sheaves 1050 and 1052. Hence there is no Y motion (motion into our out of the written page) as the camera moves in the X-axis.

Figure 12 is a close-up perspective reeving diagram of the top of the scoreboard as shown in Figs. 10 and 11. Specifically, X-axis drum winch 80 (here implemented as a bull wheel) simply redirects X movement line from the left side of Figure 11 to the right side and visa versa. This is shown as the line that couples to the upper left sheave (shown as a small circle in the top left of the scoreboard) to X-axis drum winch 80 to the upper right sheave (shown as a small circle in the top right of the scoreboard). This results in X-axis movement. Movement of Y-axis drum winch 82 (here implemented as a bull wheel) to extract line from one side of the camera and inject line to the other side of the camera results in Y-axis movement. For example, this is shown as the line that passes through the right upper sheave then through Y-axis drum winch 82 then through the right lower sheave. Hence for X and Y movement, only X and Y movement line couples to the X and Y-axis drums respectively. However, for Z axis movement, rotation of Z movement device 84 that is coupled to both ends of X movement line and both ends of Y movement line results in Z-axis movement without substantial movement of the supported object in X or Y axes. For example, the bottom left of the scoreboard is coupled with two sheaves that allow for both X and Y movement line to travel to Z movement device 84 and in addition the bottom right sheave and the left upper sheave allow for X and Y movement line respectively to travel to and from Z movement device 84. Hence Z movement device 84 couples to two sides of X movement line and two sides of Y movement line. Alternatively, the lines may be coupled to one another resulting in either one longer line with two ends or if both ends of both lines are coupled to one another, then one long looped movement line results. Furthermore, each movement line may have its ends coupled to its other end, resulting in one or both lines being looped or two ended. Regardless of the coupling method at the Z movement device, X, Y and Z movement is accomplished as previously described.

Although the redirection sheaves at the top of the scoreboard and the various movement devices and bull wheels are shown coupled to the scoreboard, they may be place absolutely anywhere available in three-dimensional space. For example, running the lines up to a cat walk or other support structure for collocation of the various motors, drives and movement devices is in keeping with the spirit of the invention.

Thus, a system for movement of an object through a three-dimensional space has been disclosed and described. While embodiments and alternatives have been disclosed and discussed, the invention herein is not limited to the particular disclosed embodiments or alternatives and the invention need not include all of the features described herein. The claims herein are what define the metes and bounds of the invention and include the full breadth and scope of all equivalents.

## Claims

1. A system for controlling movement of an object through three-dimensional space comprising:
an object adapted for three-dimensional movement over an area, said area comprising a perimeter, said perimeter defined by at least a first support rope and a second support rope wherein said at least said first and said second ropes are arranged to define at least a first corner, a second corner and a third corner adjacent said perimeter;
a first line coupled with said object and with a first motorized line movement device configured to displace said first line in a direction determined by rotation of said first motorized line movement device;
a first pulley attached to a first location proximate to said first corner and configured to redirect said first line as said first line passes through said first pulley to said third corner and said first motorized line movement device;
a second line coupled with said object and with a second motorized line movement device configured to displace said second line in a direction determined by rotation of said second motorized line movement device;
a second pulley attached to a second location proximate to said second corner and configured to redirect said second line as said second line passes through said second pulley to said third corner and said second motorized line movement device; and
a Z movement device configured to displace said first line and said second line and move an object vertically as determined by rotation of said Z movement device.

2. The system of claim 1 where said object comprises a camera.

3. The system of claim 1 wherein said first line and said second line are two sides of a single line.

4. The system of claim 1 where said object comprises a power source.

5. The system of claim 1 wherein said second pulley is released to allow for storage of said first line and said second line.

6. The system of claim 1 where said object comprises a self leveling apparatus.

7. The system of claim 1 where tension is applied to one or more of said first support rope, said second support rope and said third support rope.

8. The system of claim 7 where said tension is applied by a tensioning device.

9. The system of claim 1 where movements of said object, said first line and said second line are controlled to avoid contact with one or more obstructions within said three-dimensional space.

10. A system for controlling movement of an object through three-dimensional space comprising:
an object adapted for three-dimensional movement over an area comprising a perimeter, said perimeter defined by support ropes, said support ropes arranged to define at least a first corner, a second corner and a third corner adjacent said perimeter;
an X movement line coupled with said object and with an X movement device;
a first pulley attached to a first location proximate to said first corner and configured to redirect said X movement line as said X movement line passes through said first pulley to said third corner and said X movement device;
a Y movement line coupled with said object and with a Y movement device;
a second pulley attached to a second location proximate to said second corner and configured to redirect said Y movement line as said Y movement line passes through said second pulley to said third corner and said Y movement device; and
a Z movement device configured to move said X movement line and said Y movement line in unison, said Z movement device configured to control vertical movement of said object.

11. The system of claim 10 where said object comprises a camera.

12. The system of claim 10 wherein said first line and said second line are two sides of a single line.

13. The system of claim 10 where said object comprises a power source.

14. The system of claim 10 wherein said second pulley is released to allow for storage of said first line and said second line.

15. A method for controlling movement of an object through three-dimensional space comprising:
arranging support ropes about the perimeter of an area, said support ropes comprising at least a first corner, a second corner and a third corner adjacent said perimeter;
coupling an X movement line to said object and to an X movement device;
attaching a first pulley to a first location proximate to said first corner of said support ropes, said first pulley configured to redirect said X movement line as said X movement line passes through said first pulley to said third corner and said X movement device;
coupling a Y movement line to said object and to a Y movement device;
attaching a second pulley to a second location proximate to said second corner of said support ropes, said second pulley configured to redirect said Y movement line as said Y movement line passes through said second pulley to said third corner and said Y movement device; and
configuring a Z movement device to move said X movement line and said Y movement line in unison to control vertical displacement of said object.
